(19) **Europäisches Patentamt**

**European Patent Office**

**Office européen des brevets**

(11) **EP 1 164 532 B1**

(12) **EUROPÄISCHE PATENTSCHRIFT**

(45) Veröffentlichungstag und Bekanntmachung des Hinweises auf die Patenterteilung:
**12.01.2005 Patentblatt 2005/02**

(51) Int Cl.⁷: **G06K 7/00**, G06K 19/07

(21) Anmeldenummer: **01121395.6**

(22) Anmeldetag: **11.05.1999**

(54) **Vorrichtung zur kontaktlosen Übertragung von Daten**

Device for the contactless transmission of data

Dispositif de transmission de données sans contact

(84) Benannte Vertragsstaaten:
**AT CH DE ES FR GB IT LI**

(30) Priorität: **15.05.1998 DE 19821909**
**30.09.1998 DE 19845065**

(43) Veröffentlichungstag der Anmeldung:
**19.12.2001 Patentblatt 2001/51**

(62) Dokumentnummer(n) der früheren Anmeldung(en) nach Art. 76 EPÜ:
**99934466.6 / 1 076 876**

(73) Patentinhaber: **Infineon Technologies AG**
**81669 München (DE)**

(72) Erfinder:
• **Lorenz, Gaul, Dr.**
  **85101 Lenting (DE)**
• **Häring, Martin**
  **95138 San Jose (US)**

(74) Vertreter: **Epping Hermann & Fischer**
**Ridlerstrasse 55**
**80339 München (DE)**

(56) Entgegenhaltungen:
| | |
|---|---|
| **EP-A- 0 377 257** | **EP-A- 0 638 872** |
| **WO-A-98/11504** | **GB-A- 2 208 025** |
| **US-A- 5 241 160** | **US-A- 5 287 112** |

**Beschreibung**

Die Erfindung betrifft eine Vorrichtung zur kontaktlosen Übertragung von Daten zwischen einer Daten-Sende-/ Empfangsvorrichtung und mindestens einem tragbaren Datenträger.

Kontaktlose Identifikationssysteme mit einer induktiven Energie- und Datenübertragung von einer Daten-Sende-/Empfangsvorrichtung (COD - Card Operating Device) auf einen tragbaren Datenträger über ein magnetisches Wechselfeld werden z. B. bei Chipkarten eingesetzt. Ein derartiges System ist in Finkenzeller, Klaus: RFID-Handbuch, Carl Hanser Verlag München 1998, Seiten 183-205 beschrieben. Zum Betrieb der Chipkarten durch die Daten-Sende-/ Empfangsvorrichtung wird zur Erzeugung des magnetischen Wechselfeldes eine bestimmte Leistung benötigt.

Die Antenne zur Erzeugung des magnetischen Wechselfeldes ist im allgemeinen eine (beliebig) geformte Leiterschleife. Diese weist bei den üblichen Betriebsbedingungen einen induktiven Blindwiderstand auf. Dieser induktive Blindwiderstand wird im Normalfall durch eine Anpaßschaltung aus Widerständen, Kondensatoren und Spulen kompensiert, und somit die Antenne auf Resonanzfrequenz abstimmt. Unter der Abstimmung auf Resonanzfrequenz wird verstanden, daß der induktive Blindwiderstand einen Wert gleich O aufweist und als Impedanz im wesentlichen nur noch die Verlustwiderstände verbleiben.

Eine Anpassung der Antenne auf Resonanz ist notwendig, wenn in der Daten-Sende-/Empfangsvorrichtung die Antenne und die Energiequelle über ein Kabel nicht bekannter Länge verbunden sind. Um von der Kabellänge unabhängig zu bleiben müssen die Antenne und die Energiequelle an den Wellenwiderstand der Leitung angepaßt werden. Die Anpassung der Antenne an den Wellenwiderstand ist z. B. in der US 5,241,160 beschrieben.

Der Betrieb in Resonanz wird üblicherweise auch verwendet, wenn die Antenne direkt mit der Energiequelle verbunden ist. Dies ist z. B. dann der Fall, wenn die Antenne und die Energiequelle auf der selben Leiterplatte aufgebracht sind.

Wenn sich kein tragbarer Datenträger im magnetischen Wechselfeld befindet, fließt bei einer Abstimmung der Antenne auf Resonanz ein maximaler Strom. Dieser maximale Strom hat ein maximales magnetischen Feld zur Folge.

Durch die Abstimmung auf Resonanz werden demzufolge auch hohe Verluste im Leerlauf verursacht. Unter Leerlauf wird im folgenden der Betriebszustand der Daten-Sende-/Empfangsvorrichtung verstanden, in dem sich kein tragbarer Datenträger im Wirkfeld der Daten-Sende-/Empfangsvorrichtung befindet. Der Wirkbereich der Daten-Sende-/Empfangsvorrichtung ist derjenige Abstand des Datenträgers zur Antenne, in dem das magnetische Wechselfeld gerade noch ausreichend groß ist, um mit dem tragbaren Datenträger Daten austauschen zu können.

Das magnetische Wechselfeld, das durch den die Antenne durchfließenden Strom erzeugt wird, ist insbesondere bei Daten-Sende-/Empfangsvorrichtungen mit kurzen Reichweiten (sogenannte Closed Coupling - Systeme) im Leerlauf meist viel größer als tatsächlich benötigt.

Befindet sich ein tragbarer Datenträger im Wirkfeld, so wirkt dieser auf die Antenne zurück. Diese Rückwirkung macht sich im Auftreten einer zusätzlichen Impedanz im Antennenkreis der Daten-Sende-/Empfangsvorrichtung bemerkbar. Ist die Antenne auf Resonanz abgestimmt, so ist diese Rückwirkung maximal, d. h. die in dem Antennenkreis auftretende zusätzliche Impedanz bewirkt eine Verringerung des Antennenstromes und somit gleichzeitig eine Verringerung des magnetischen Feldes. Diese Rückwirkung wird umso größer, je größer die Verkoppelung zwischen der Antenne und dem tragbaren Datenträger ist. Die Verkopplung wird im allgemeinen bei kleineren Abständen zwischen der Antenne und dem tragbaren Datenträger größer. Im ungünstigsten Fall kann der tragbare Datenträger bei Annäherung an die Antenne den Strom durch diese aufgrund der Rückwirkung so stark verringern, daß eine ausreichende Energieversorgung zwischen der Daten-Sende-/Empfangsvorrichtung und dem Datenträger nicht mehr möglich ist.

Um einen Betrieb des Datenträgers im Wirkfeld der Daten-Sende-/Empfangsvorrichtung sicherzustellen, muß bei Abstimmung der Antenne auf Resonanz deshalb ein entsprechend hoher Strom im Leerlauf vorgehalten werden. Somit wird sichergestellt, daß bei einem Datenträger im Wirkbereich die magnetische Feldstärke trotz der Rückwirkung noch ausreichend hoch ist, um eine ausreichende Energieversorgung für den Datenträger zu erhalten. Dies bedeutet nichts anderes, als daß beim Einbringen eines Datenträgers in das Wirkfeld der Strom durch die Antenne ausreichend groß ist. Verursacht durch die hohe Leistung zur Erzeugung des magnetischen Wechselfeldes im Leerlauf, fallen sehr hohe Verluste an.

Die beschriebene Wirkungsweise bei einer Auslegung der Antenne auf Resonanz macht sich noch stärker nachteilig bemerkbar, wenn das System für mehrere Datenträger ausgelegt ist. Die Rückwirkung mehrerer Datenträger auf den Antennenkreis vervielfacht sich dann entsprechend der Anzahl der im Wirkfeld befindlichen Datenträger. Die die Leistung bereitstellende Energiequelle für die Daten-Sende-/Empfangsvorrichtung muß deshalb noch größer dimensioniert werden. Dies macht sich in einem hohen Platzverbrauch sowie in hohen Kosten bemerkbar.

Die Aufgabe der vorliegenden Erfindung besteht daher darin, eine Vorrichtung zur kontaktlosen Übertragung von Daten vorzusehen, die zur Erzeugung eines magnetischen Wechselfeldes bei einem vorgegebenen Wirkbereich eine möglichst geringe Leistungaufnahme aufweist.

Die Erfindung wird mit den Merkmalen des Patentanspruchs 1 gelöst. Weiterbildungen ergeben sich aus den Unteransprüchen.

Die Antenne der Daten-Sende-/Empfangsvorrichtung kann in der Gesamtimpedanz, d. h. in einer Schaltung, welche eine Impedanztransformation vornimmt, so ausgeführt werden, daß der Blindwiderstand ungleich 0 ist, wenn kein tragbarer Datenträger induktiv mit der Antenne verbunden ist. Mit anderen Worten heißt dies, daß die Antenne nicht auf Resonanz abgestimmt ist, sofern kein tragbarer Träger im Wirkbereich der Daten-Sende-/Empfangsvorrichtung befindlich ist.

Auf diese Weise wird durch das Einbringen eines Blindwiderstandes in die Antenne der Strom, der im Leerlauffall vorgehalten werden muß, gegenüber dem Stand der Technik verringert. Dies zieht geringere Leerlaufverluste nach sich. Die Energieversorgung kann aus diesem Grunde kleiner dimensioniert werden. Es muß nicht für eine aufwendige Kühlvorrichtung Sorge getragen werden. Ein weiterer Vorteil besteht darin, daß sich durch den im Leerlauf bereits vorhandenen Blindwiderstand beim Einbringen eines Datenträgers die Rückwirkung zum Datenträger auf die Antenne verringert bzw. gewinnbringend eingesetzt werden kann. Dies hat z. B. zur Folge, daß die Stromverringerung durch das Einbringen des Datenträgers ins Wirkfeld wesentlich geringer ist, als der Stromabfall bei einer Daten-Sende-/Empfangsvorrichtung nach dem Stand der Technik. Die Problematik, daß durch das Einbringen eines Datenträgers in das Wirkfeld der Strom in der Antenne abgeschnitten werden kann, kann dadurch vermieden werden.

Der Blindwiderstand kann sowohl induktiver Art oder kapazitiver Art sein. Es besteht sogar die Möglichkeit, die Rückwirkung der Karten auf die Antenne so einzustellen, daß sich für einen vorgegebenen Auslegungsfall, z. B. drei Datenträger die in einem Bereich von x cm noch arbeiten müssen, eine definierte Erhöhung des Antennenstromes ergibt. Zu diesem Zweck muß der Blindwiderstand entsprechend dimensioniert sein. Der Blindwiderstand kann nur durch eine aufwendige Simulationsrechnung ermittelt werden. Die von der Daten-Sende-/Empfangsvorrichtung zur Erzeugung des magnetischen Wechselfeldes bzw. zur Energieversorgung der Datenträger benötigte Leistung kann durch die vorgeschlagene Maßnahme eines gezielten Einbringens eines Blindwiderstandes in den Antennenkreis wesentlich reduziert werden.

In einer Ausgestaltung der Erfindung ist auch eine Kombination der beiden Lösungen möglich. Dies bedeutet, daß die Antenne der Daten-Sende-/Empfangsvorrichtung sowohl einen Blindwiderstand aufweisen kann, d. h. also nicht auf Resonanz abgestimmt ist, als auch einen zusätzlichen Verlustwiderstand. Durch diesen zusätzlichen Verlustwiderstand, der sich z. B. zwischen der Antenne und der Anpaßschaltung befindet, wird wiederum erzielt, daß der Strom im Leerlauf der Daten-Sende-/Empfangsvorrichtung verringert wird und somit die Leerlaufverluste reduziert werden. Durch das Vorsehen des zusätzlichen Verlustwiderstandes verringert sich wiederum die Rückwirkung der sich im magnetischen Feld der Daten-Sende-/Empfangsvorrichtung befindlichen Datenträger auf die Antenne. Die Rückwirkung, bedingt durch das Auftreten einer Impedanz im Antennenkreis der Daten-Sende-/Empfangsvorrichtung macht sich zwar auch in einem Verringern des Stromes durch die Antenne bemerkbar, mit der eine Reduzierung der magnetischen Feldstärke einhergeht. Jedoch ist der Stromabfall wesentlich weniger stark ausgeprägt als bei einer Daten-Sende-/Empfangsvorrichtung nach dem Stand der Technik. Verursacht durch den geringen Stromabfall beim Einbringen eines Datenträgers in das Wirkfeld bleibt die geforderte Stärke des magnetischen Wechselfeldes groß genug, obwohl die Energieversorgung der Daten-Sende-/Empfangsvorrichtung kleiner dimensioniert werden kann und diese somit auch einen geringeren Strom durch die Antenne zur Verfügung stellt.

In einer weiteren Ausgestaltungsform weist die Daten-Sende-/Empfangsvorrichtung, deren Antenne einen induktiven Blindwiderstand und einen zwischen der Antenne und der Sendevorrichtung bzw. der Empfangsvorrichtung einen zusätzlichen Widerstand aufweist, eine Anpaßschaltungsvorrichtung zwischen der Antenne und der Sendevorrichtung bzw. der Empfangsvorrichtung auf.

Varianten, bei denen die Leistungsreduzierung der Energieversorgung der Daten-Sende-/Empfangsvorrichtung mittels eines Blindwiderstandes in der Antenne bewirkt wird, weisen eine Verbindung bekannter Länge auf, die die Antenne und die Sendevorrichtung bzw. die Empfangsvorrichtung miteinander verbinden. Bei der Verwendung einer Verbindung, z. B. einem Kabel, bekannter Länge ist es nicht notwendig, eine Anpaßschaltung vozusehen.

Gemäß Patentanspruch 1 weist die Anpaßschaltung zusätzlich zu dem Widerstand, der zur Begrenzung der Güte dient, einen zusätzlichen Verlustwiderstand auf. Die Anpaßschaltungsanordnung, die mindestens aus einem Widerstand zur Begrenzung der Güte sowie Kondensatoren und/oder Spulen besteht, ist zwischen der Antenne und der Sendevorrichtung bzw. der Empfangsvorrichtung eingebracht. Die Anpaßschaltungsanordnung dient zur Anpassung der Gesamtimpedanz an den Wellenwiderstand einer Leitung unbekannter Länge. Mit dieser Maßnahme werden die gleiche Wirkung und die gleichen Vorteile erzielt, wie oben beschriebenen. Auch hierbei wird die Rückwirkung der sich im Feld der Daten-Sende-/Empfangsvorrichtung befindlichen Datenträger auf die Antenne verringert. Die Folge ist, daß im Leerlauf ein gegenüber dem Stand der Technik verringerter Strom vorgehalten werden kann.

Eine bevorzugte Lösung besteht im Einbringen eines Blindwiderstandes in die Antenne der Daten-Sende-/Empfangsvorrichtung. Mit diesem Lösungsprinzip lassen sich die niedrigsten Ströme im Leerlauf erzielen. Dabei wurde selbstverständlich davon ausgegangen, daß die Rahmenbedingungen für alle Varianten gleich sind. Dies bedeutet, die Daten-Sende-/Empfangsvorrichtung ist auf eine bestimmte Anzahl von Datenträgern ausgelegt, und der Wirkbereich, in dem ein Datenaustausch zwischen dem mindestens einen Datenträger und der Daten-Sende-/Empfangsvor-

richtung möglich ist, einen vorgegebenen Abstand von der Antenne einnimmt.

Der Vorteil aller bisher beschriebenen Lösungsprinzipien besteht darin, daß durch die Verringerung des benötigten Antennenstromes die Endstufe der Energieversorgung (Wechselspannungsquelle) für geringere Leistungen dimensioniert werden kann. Hierdurch ergibt sich eine Kostenreduzierung. Ein weiterer Vorteil besteht darin, daß die Schaltungsanordnung zwischen der Energieversorgung und der Antenne keine zusätzlichen Schaltungselemente gegenüber dem Stand der Technik benötigt. Die Bauelemente werden lediglich anders dimensioniert.

Die Energieübertragung über eine induktive Kopplung nutzt nur das magnetische Nahfeld der Antenne aus. Unvermeidbar ist damit aber auch eine Abstrahlung von elektromagnetischen Wellen verbunden. Die abgestrahlte Leistung ist dabei direkt proportional dem Quadrat des Antennenstromes. Dies bedeutet, daß die Reduzierung des Antennenstromes zugleich die wirksam abgestrahlte Leistung verringert. Hierdurch wird die Einhaltung von Normen erleichtert, welche die Abstrahlung begrenzen. Diese Problematik wird später erläutert.

In der Lösungsvariante, in der ein zusätzlicher Widerstand zwischen die Antenne und die Anpaßschaltung eingebracht ist, berechnet sich die Summe aus dem Widerstand zur Begrenzung der Güte und dem zusätzlichen Verlustwiderstand nach folgender Formel:

$$R \approx \frac{k_{\min} k_{\max} (2\pi f_0)^2 \, L_F L_T}{2 \cdot |B_T|} - R_F \; .$$

Eine Berechnung nach dieser Formel, die die Auslegung der Daten-Sende-/Empfangsvorrichtung (Anzahl der Datenträger, Wirkbereich) berücksichtigt, ergibt die größte Leistungsreduzierung im Leerlauf. Die Daten-Sende-/Empfangsvorrichtung arbeitet dann in allen Betriebszuständen zuverlässig. Ein Absinken (= Abschneiden) des Stromes auf ungünstige Werte in der Antenne der Daten-Sende-/Empfangsvorrichtung kann bei einer Dimensionierung nach dieser Formel nicht vorkommen.

Die Resonanzfrequenzen der tragbaren Datenträger können entweder gleich der vorgegebenen Betriebsfrequenz der Daten-Sende-/Empfangs-vorrichtung dimensioniert sein, jedoch auch größer oder kleiner als die vorgegebene Betriebsfrequenz. In einer bevorzugten Ausgestaltungsform wird die Resonanzfrequenz der tragbaren Datenträger über der vorgegebenen Frequenz ausgelegt. Die auf dem tragbaren Datenträger befindliche Schaltungsanordnung wird durch das induzierte Signal, das beim Einbringen des Datenträgers in das Wirkfeld der Daten-Sende-/Empfangsvorrich-tung in der Datenträger-Antenne entsteht, mit Spannung versorgt. Hierzu wird die Resonanzüberhöhung durch einen Serienschwingkreis aus einer Kapazität und der Induktivität der Datenträger-Antenne ausgenutzt. Die Wirkungsweise wird später in Verbindung mit den Figuren genauer erklärt.

Die Schaltungsanordnung auf dem tragbaren Datenträger kann als integrierter Halbleiterchip oder als diskrete Schaltung ausgeführt sein. Als tragbarer Datenträger können Chipkarten, Sicherungsetiketten für verschiedene Gegenstände oder aber Identifikationsvorrichtungen verstanden werden. Es ist jedoch auch denkbar, daß die tragbaren Datenträger z. B in Pkw's eingebaut werden, so daß eine Bezahlung für die Benutzung bestimmter Straßenabschnitte vorgenommen werden kann.

Die erfindungsgemäße Daten-Sende-/Empfangsvorrichtung und die Datenträger-Antenne sind in der Lage, in einem Bereich zwischen 0 und 1 m, miteinander zu verkoppeln. Vorzugsweise ist die Daten-Sende-/Empfangsvorrichtung so ausgelegt, daß die Antennen in einem Bereich zwischen 0 und 1 cm verkoppelt. Bei Datenträgern im sogenannten CD-1-Format (Scheckkarten, in ISO festgelegt) verkoppeln Datenträger und Daten-Sende-/Empfangsvorrichtung in einem Bereich zwischen 0 und einigen Zentimetern. Diese Daten-Sende-/Empfangsvorrichtung ist unter dem Namen Closed Coupling-Systeme bekannt.

Bei einer Auslegung der Daten-Sende-/Empfangsvorrichtung auf einen Bereich von 0 bis 15 cm sind die Systeme unter dem Namen Proximity-Systeme bekannt. Im Bereich zwischen 0 und 1 m werden die Daten-Sende-/Empfangsvorrichtungen Vicinity-Systeme genannt. Der Anwendungsbereich der Erfindung ist aber nicht darauf beschränkt, er hängt vielmehr von der Größenrelation Antenne/Datenträger ab.

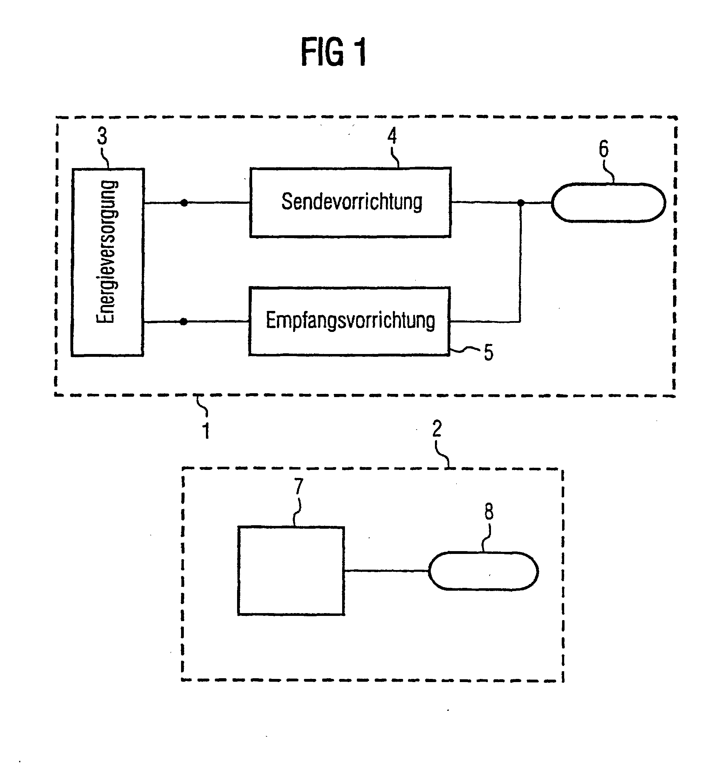

Die Erfindung wird anhand der Figuren 1 bis 8 näher erläutert.

Es zeigen:

| | |
|---|---|
| Figur 1 | den schematischen Aufbau einer Daten-Sende-/Empfangsvorrichtung sowie eines tragbaren Daten-trägers |
| Figur 2a und 2b | die vereinfachten linearen Ersatzschaltbilder einer Daten-Sende-/ Empfangsvorrichtung sowie eines tragbaren Datenträgers, |
| Figur 3a | das Ersatzschaltbild der Daten-Sende-/Empfangs-vorrichtung, wenn sich ein tragbarer Datenträger im Wirkbereich befindet, |
| Figur 3b | ein Ersatzschaltbild eines tragbaren Datenträgers,der sich im Wirkbereich der Daten-Sende-/Empfangsvorrichtung befindet, |

| Figur 4 | den normierten Verlauf der Betriebsspannung eines oder mehrerer tragbarer Datenträger über der Resonanzfrequenz, |
| Figur 5 | ein Ersatzschaltbild der erfindungsgemäßen Daten-Sende-/Empfangsvorrichtung, bei der ein zusätzlicher Widerstand zwischen die Antenne und die Anpaßschaltung eingebracht ist, |
| Figur 6 | die Auswirkung auf den Frequenzgang bei verschiedenen Widerständen zwischen der Antenne und der Anpaßschaltung, |
| Figur 7 | die Darstellung des magnetischen Feldverlaufs über dem Abstand der Datenträger zu der Daten-Sende-/Empfangsvorrichtung und |
| Figur 8 | die Darstellung der Leistungsaufnahme der Energieversorgung bei unterschiedlicher Auslegung von Wirkwiderstand und/oder Blindwiderstand der Antenne. |

In Figur 1 sind eine Daten-Sende-/Empfangsvorrichtung 1 und ein tragbarer Datenträger 2 in schematischer Darstellung abgebildet. Die Daten-Sende-/Empfangsvorrichtung 1 weist eine Energieversorgung 3 sowie eine Empfangsvorrichtung 5 und eine Sendevorrichtung 4 auf. Sowohl die Sendevorrichtung 4 als auch die Empfangsvorrichtung 5 sind mit einer Antenne 6 miteinander verbunden. Die Antenne 6 ist im einfachsten Fall eine beliebig geformte Leiterschleife. Sowohl die Sendevorrichtung 4 als auch die Empfangsvorrichtung 5 sind mit der Energieversorgung 3 verbunden. In der Regel weist die Sendevorrichtung 4 unter anderem einen Quarz, einen Oszillator, einen Modulator sowie eine Leistungs-Endstufe auf. Die Empfangsvorrichtung 5 besteht z. B. aus einem Bandpaßfilter, einem Verstärker sowie einem Demodulator. Da der genaue Aufbau sowohl von der Sendevorrichtung 4 als auch von der Empfangsvorrichtung 5 für den Erfindungsgedanken nicht wesentlich sind, wird darauf nicht näher eingegangen.

Der tragbare Datenträger 2 weist eine Datenträger-Antenne 8 sowie eine Schaltungsanordnung 7 auf. Die Schaltungsanordnung 7 kann beispielsweise als integrierter Halbleiterchip oder aber auch in Form einer diskreten Schaltung ausgeführt sein. Die Schaltungsanordnung 7 kann z. B. eine Anpaßschaltung, die die Schaltungsanordnung 7 mit der Datenträger-Antenne 8 verbindet, aufweisen. Weiterhin kann die Schaltungsanordnung 7 einen Modulator, einen Demodulator, einen Mikroprozessor oder aber auch einen Speicher beinhalten. Da die genaue Ausgestaltung der Schaltungsanordnung 7 für die Erfindung nicht wesentlich ist, wird hierauf nicht näher eingegangen.

Die Funktionsweise der Daten-Sende-/Empfangsvorrichtung ist wie folgt: Die Sendevorrichtung 4 erzeugt ein Signal mit einer vorbestimmten Frequenz, welche in Zukunft als Betriebsfrequenz $f_o$ bezeichnet wird. Dieses Signal wird von der Sendevorrichtung 4 an die Antenne 6 der Daten-Sende-/Empfangsvorrichtung weitergegeben. Befindet sich der tragbare Datenträger 2 im Wirkbereich der Daten-Sende-/Empfangsvorrichtung 1, so wird das von der Antenne 6 erzeugte Signal zum tragbaren Datenträger 2 übertragen, wo es von der Datenträger-Antenne 8 in eine induzierte Spannung verwandelt wird. Diese induzierte Spannung sorgt sowohl für die Betriebsspannung der Schaltungsanordnung 7 und beinhaltet gleichermaßen die zu transportierende Information, die von der Schaltungsanordnung 7 aufbereitet wird.

Im umgekehrten Falle wird ein Signal von der Schaltungsanordnung 7 zur Datenträger-Antenne 8 übertragen, wobei dieses mit einer bestimmten Frequenz von der Datenträger-Antenne 8 übertragene Signal eine Spannung in der Antenne 6 der Daten-Sende-/Empfangsvorrichtung 1 induziert. Dieses Signal wird der Empfangsvorrichtung 5 zugeleitet und dort aufgearbeitet.

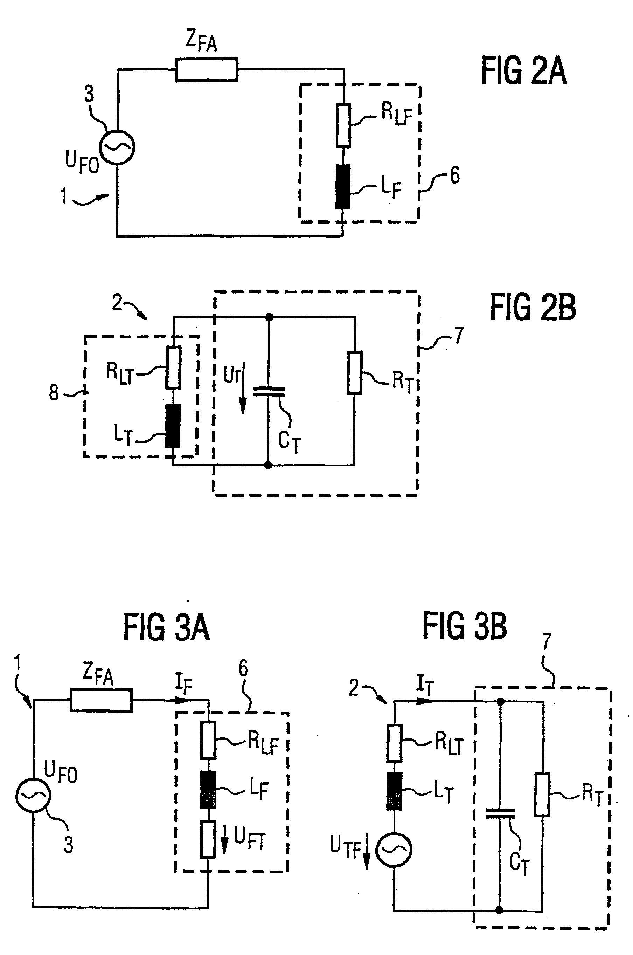

Figur 2a zeigt ein Ersatzschaltbild einer Daten-Sende-/Empfangsvorrichtung 1. Die Antenne selbst, weist einen induktiven Blindwiderstand auf. In Figur 2b ist ein einfaches lineares Ersatzschaltbild eines tragbaren Datenträgers 2 därgestellt. Die Energieversorgung 3 und die gesamte Beschaltung zwischen der Energieversorgung und der Antenne 6 der Daten-Sende-/Empfangsvorrichtung 1 können auf eine Ersatzspannungsquelle $U_{F0}$ (Quellspannung, im Zeitbereich $\hat{U}_{F0}*\sin(2\pi ft)$) und eine Innenimpedanz $Z_{FA}$ reduziert werden. Die Innenimpedanz kann aus einer beliebigen Zusammenschaltung von Widerstanden R, Induktivitäten L und Kapazitäten C bestehen. Die Antenne 6 wird als eine Induktivität $L_F$ und einem Verlustwiderstand $R_{LF}$ modelliert. Die Ersatzspannungsquelle $U_{F0}$ und die Innenimpedanz $Z_{FA}$ sowie die Induktivität $L_F$ und der Verlustwiderstand $R_{LF}$ der Antenne 6 sind in Form einer Reihenschaltung miteinander verschaltet. Das Ersatzschaltbild in Figur 2a gibt die Daten-Sende-/Empfangsvorrichtung 1 in einem Zustand wieder, in der kein tragbarer Datenträger innerhalb des Wirkbereichs ist. Dies bedeutet es ist keine Verkopplung zwischen der Antenne der Daten-Sende-/Empfangsvorrichtung und einer Antenne eines tragbaren Datenträgers vorhanden.

In Figur 2b ist die Datenträger-Antenne 8 aus einem Verlustwiderstand $R_{LT}$ und einer Induktivität $L_T$ modelliert. Der Widerstand $R_{LT}$ und die Spule $L_T$ sind in Serie miteinander verschalten. Die Schaltungsanordnung 7, die z. B. als ein integrierter Halbleiterchip ausgeführt sein kann, läßt sich vereinfacht aus einem Verlustwiderstand $R_T$ und einer dazu parallel geschaltenen Kapazität $C_T$ darstellen. Die Schaltungsanordnung 7 ist der Datenträger-Antenne 8 parallel geschaltet. Auch in Figur 2b befindet sich der tragbare Datenträger 2 in einem Zustand, in der keine Verkoppelung zwischen den Antennen der Daten-Sende-/Empfangsvorrichtung oder eines anderen tragbaren Datenträgers vorhanden ist. Der tragbare Datenträger 2 weist aufgrund der Größe der Kapazität $C_T$ ein überwiegend kapazitives Verhalten auf.

Die Gesamtimpedanz des Antennenkreises wird durch folgende Gleichung wiedergegeben:

$$Z_F = R_F + j \cdot B_F = Z_{FA} + R_{LF} + j \cdot \omega \cdot L_F,$$

Im Fall der Anpassung oder im Fall der Resonanz ist der Blindanteil dieser Impedanz 0.

Die Gesamtimpedanz des Serienschwingkreises des Datenträgers ist:

$$Z_T = R_T + j \cdot B_T = R_{LT} + j \cdot \omega \cdot L_T + \frac{1}{\frac{1}{R_r} + j \cdot \omega \cdot C_T},$$

Die Figuren 3a und 3b zeigen die Ersatzschaltbilder der Daten-Sende-/Empfangsvorrichtung 1 bzw. des tragbaren Datenträgers 2, wenn diese miteinander verkoppelt sind, d. h. wenn der tragbare Datenträger 2 im Wirkbereich der Daten-Sende-/Empfangsvorrichtung 1 befindlich ist. Bedingt durch die Verkoppelung der Antenne 6 mit der Datenträger-Antenne 8 treten aufgrund des Durchflutungsgesetzes Induktionsspannungen in Serie zu den Induktivitäten auf. Dabei ist $U_{TF}$ die vom Feldstrom $I_F$ in der Kartenspule induzierte Spannung, $U_{FT}$ stellt die vom Datenträger-Strom $I_T$ in der Antennenspule induzierte Spannung dar. Dieser Zusammenhang läßt sich mit folgenden Formeln ausdrücken:

$$U_{FT} = -j\omega \cdot M \cdot I_T$$

$$U_{TF} = j\omega \cdot M \cdot I_F .$$

mit

$\omega$ : Kreisfrequenz (=2$\pi f$),
$j$ : imaginäre Einheit und
M: Gegeninduktivität.

Aus der Gegeninduktivität M und den Eigeninduktivitäten der beiden Spulen läßt sich ein *Koppelfaktor k* definieren:

Koppelfaktor:

$$K^2 = \frac{M^2}{L_E \cdot L_T}.$$

Bei minimaler Entfernung zwischen der Antenne und dem Datenträger kann der Koppelfaktor maximal 1 werden. Bei unendlicher Entfernung wird der Koppelfaktor 0.

Gemäß der ersten Ausführungsform der Erfindung ist eine freie Wahl der Impedanz des Antennenkreises 6 vorgesehen, wobei eine Anpassung an Wellenwiderstand einer Leitung zwischen der Antenne 6 und der Energieversorgung 3 nicht notwendig ist. Dies heißt konkret, daß die Antenne 6 und die Energieversorgung 3 definiert miteinander verbunden sind und deswegen die Gesamtimpedanz des Antennenkreises einen Blindanteil aufweisen darf. Unter einer definierten Verbindung der Antenne 6 mit der Energieversorgung 3 kann ein Kabel bekannter Länge verstanden werden oder aber auch eine unmittelbar nebeneinander angeordnete Verschaltung zwischen Antenne und Sende- bzw. Empfangsvorrichtung, so daß die Leitung zwischen der Antenne 6 und der Energieversorgung 3 minimal ist.

Grundsätzlich können abhängig von den geforderten Systemeigenschaften verschiedene Fehlabstimmungen zur Leistungsminimierung führen.

Es besteht die Möglichkeit, den Blindanteil so zu dimensionieren, daß für den ungünstigsten Fall (die maximal mögliche Anzahl der tragbaren Datenträger befinden sich im Wirkfeld) durch die Rückwirkung der tragbaren Datenträger 2 auf die Antenne 6 der Antennenstrom sich so weit erhöht, daß ein problemloser Betrieb möglich ist. Dies bedeutet nichts anderes als daß im Leerlauf der Strom durch die Antenne 6 minimal ist und sich durch das Einbringen eines jeden Datenträgers 2 etwas erhöht. Der Strom paßt sich aufgrund der Rückwirkung der Datenträger 2 dem Bedarf an. Weisen die Datenträger 2 eine Resonanzfrequenz auf, die über der der vorgegebenen Daten-Sende-/Empfangs-

vorrichtung 1 liegt, so wird diese Optimierung als eine induktive Fehlabstimmung des Antennenkreises bezeichnet.

Die Größe des induktiven Blindwiderstandes, der eine automatische Erhöhung des Antennenstroms bei Einbringen eines Datenträgers in das Wirkfeld bewirkt, kann nur durch aufwendige Simulationsrechnungen gefunden werden. Die Funktionsweise kann folgendermaßen erklärt werden:

Wird bei einer induktiven Abstimmung der Gesamtimpedanz des Antennenkreises $Z_F$ der Daten-Sende-/Empfangsvorrichtung eine Karte in das Wirkfeld eingeführt, so erscheint die überwiegend kapazitive Impedanz $Z_T$ des Serienschwingkreises des Datenträgers im Antennenkreis der Daten-Sende-/Empfangsvorrichtung als induktive Impedanz $Z_{FT}$. Da der Betrag der transformierten Impedanz $Z_{FT}$ sehr viel kleiner ist als die Impedanz $Z_F$ des Antennenkreises, ist die Rückwirkung auf den Antennenstrom nur sehr klein. Der Antennenstrom mit einem Datenträger im Wirkfeld nimmt deshalb nur wenig gegenüber dem Antennenstrom ab, wenn sich kein Datenträger im Wirkfeld befindet.

Werden jedoch mehrere Datenträger in das Wirkfeld der Daten-Sende-/Empfangsvorrichtung eingebracht, so verkoppeln die Impedanzen die Datenträger untereinander. Durch das Verkoppeln der Impedanzen der Datenträger ändert sich deren Impedanz $Z_T$, wobei diese bei einer starken Verkopplung der Datenträger untereinander jeweils vorwiegend induktives Verhalten aufweist. Diese vorwiegend induktive Impedanz erscheint im Antennenkreis als kapazitive Impedanz $Z_{FT}$. Bei der induktiven Abstimmung der Gesamtimpedanz des Antennenkreises kompensiert die kapazitive Impedanz $Z_{FT}$ zum Teil die induktive Impedanz $Z_F$, so daß für den ungünstigsten Fall einer starken Verkoppelung der Datenträger untereinander und eine maximale Entfernung der Datenträger zum Lesegerät sich eine Stromerhöhung im Antennenkreis ergibt.

Wird die Gesamtimpedanz $Z_F$ des Antennenkreises der Daten-Sende-/Empfangsvorrichtung kapazitiv abgestimmt, so kann beim Einbringen des Datenträgers eine Stromerhöhung eingestellt werden. Die überwiegend kapazitive Impedanz $Z_T$ des Datenträgers erscheint im Antennenkreis wiederum als überwiegend induktive Impedanz. Die kapazitive Abstimmung des Antennenkreises und die induktive Impedanz, die durch den Datenträger in den Antennenkreis hineintransformiert ist, kompensieren sich zum Teil, so daß eine Stromerhöhung möglich ist. Die kapazitive Impedanz des Antennenkreises kann so eingestellt werden, daß sich für eine maximale Entfernung des Datenträgers die größte Stromerhöhung ergibt.

Wird eine größere Anzahl an Datenträgern in den Wirkbereich der Daten-Sende-/Empfangsvorrichtung eingebracht, so verkoppeln die Datenträger wiederum untereinander, so daß diese im Antennenkreis als eine kapazitive Impedanz erscheinen. Da die transformierte Impedanz der Datenträger sehr viel kleiner als die gesamte Impedanz des Antennenkreises ist, ergibt sich auf dem Antennenstrom wiederum nur eine kleine Rückwirkung. Ein Abschneiden des Antennenstromes bei starkem Annähern der Datenträger an die Daten-Sende-/Empfangsvorrichtung kann jedoch nicht vorkommen.

Das Prinzip der Verkoppelung der Datenträger untereinander wird weiter unten beschrieben.

Bis zu welchem Grad eine Optimierung möglich ist, wird hauptsächlich durch die geforderten Systemeigenschaften bedingt. Die Systemeigenschaften bestimmen sich aus der Anzahl der Datenträger im Wirkfeld, bei denen ein Datenaustausch zwischen dem Datenträger und der Daten-Sende-/Empfangsvorrichtung problemlos funktionieren soll, sowie dem maximalen Abstand zur Antenne der Daten-Sende-/Empfangsvorrichtung bis zu dem eine Verkoppelung zwischen Datenträgern und der Daten-Sende-/Empfangsvorrichtung möglich sein soll. Das Optimierungspotential ist bei den sogenannten Closed Coupling Systemen am größten.

Für eine Optimierung der Leistungsaufnahme der Antenne der Daten-Sende-/Empfangsvorrichtung ist noch folgende Randbedingung zu beachten. Da die Schaltungsanordnung 7 des tragbaren Datenträgers 2 keine eigene Energieversorgung besitzt, muß die für die Schaltungsanordnung 7 notwendige Betriebsspannung $U_T$ durch das von der Daten-Sende-/Empfangsvorrichtung induzierte Signal in der Datenträger-Antenne ausgenutzt werden. Es wird hierbei die sogenannte Resonanzüberhöhung durch den Serienschwingkreis der Kapazität $C_T$ und der Induktivität $L_T$ des tragbaren Datenträgers 2 ausgenutzt.

Befinden sich mehrere Datenträger 2 im Wirkfeld der Daten-Sende-/Empfangsvorrichtung 1, so verkoppeln die Datenträger 2 nicht nur mit der Antenne 6, sondern auch untereinander. Durch diese Verkoppelung untereinander sinkt die Resonanzfrequenz jedes Datenträgerschwingkreises. Das Absinken der Resonanzfrequenz ist umso stärker, je stärker die Datenträger miteinander verkoppeln, d. h. je näher der Abstand zwischen beiden Datenträgern ist, und je mehr Datenträger im Wirkfeld sind. Im ungünstigsten Fall kann sich die Resonanzfrequenz eines Datenträgers aufgrund der Verkopplung der Datenträger untereinander um den Faktor $1/\sqrt{N}$ verringern, wobei N die Anzahl der Datenträger ist. Der ungünstigste Fall würde dann auftreten, wenn die Datenträger-Antennen einen Abstand von 0 cm aufweisen und die Spulen deckungsgleich übereinander gebracht wären. Dies kann in der Praxis nicht auftreten, da die Antennen in der Regel in einem Gehäuse z. B. bei einer Chipkarte von einer Plastikumhüllung, umgeben sind.

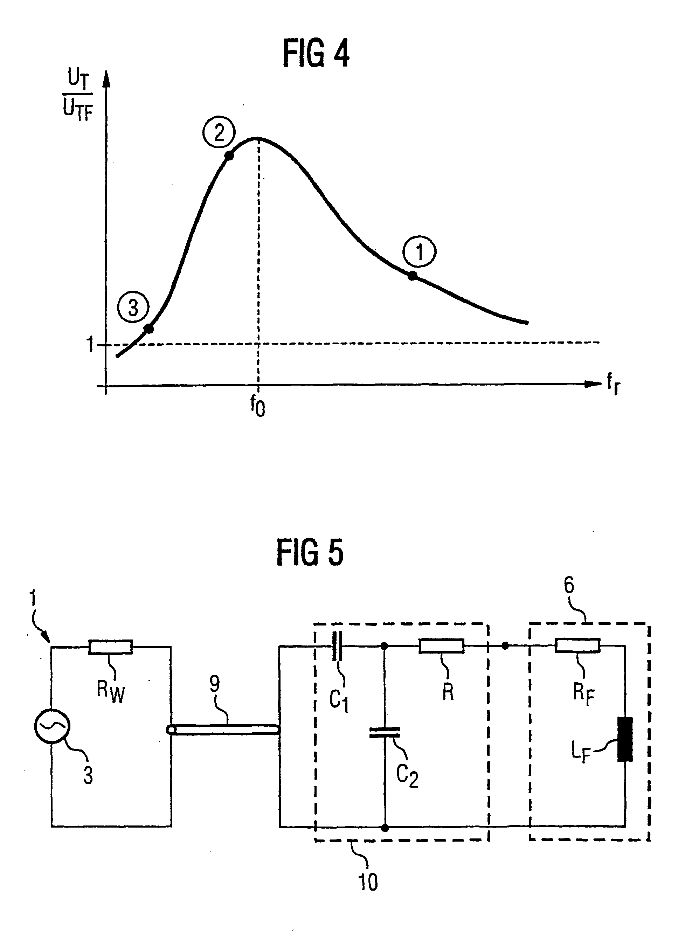

Der Zusammenhang des Absinkens der Resonanzfrequenz bei Verkoppelung mehrerer Datenträger unteinander ist in Figur 4 dargestellt. Hierzu ist die Spannung $U_T$, die am Eingang der Schaltungsanordnung 7 des Datenträgers 2 anliegt, auf die durch die Antenne 6 der Daten-Sende-/Empfangsvorrichtung 1 in der Datenträger-Antenne 8 induzierte Spannung $U_{TF}$ normiert. Vorteilhaft für den Betrieb eines Datenträgers ist es, daß das Verhältnis zwischen $U_T$ und $U_{TF}$ größer als 1 ist. In diesem Fall wird bereits bei entsprechend größeren Enfernungen eine ausreichende Spannungsversorgung der Schaltungsanordnung 7 sichergestellt. Wird die Daten-Sende-/Empfangsvor-richtung auf genau einen Datenträger ausgelegt, so wird die Resonanzfrequenz des Datenträgers idealerweise auf die vorgesehene Frequenz $f_0$ der Daten-Sende-/Empfangsvorrichtung abgestimmt. In diesem Fall ist das Verhältnis zwischen $U_T$ und $U_{TF}$ am größten. Bei einer Auslegung der Daten-Sende-/Empfangsvorrichtung auf mehrere Karten wird die Resonanzüberhöhung nur teilweise ausgenutzt.

Zu diesem Zweck wird die Resonanzfrequenz eines jeden Datenträgers oberhalb der vorgesehenen Frequenz $f_0$ ausgelegt. Befindet sich ein Datenträger im Wirkfeld der Daten-Sende-/Empfangsvorrichtung, so liegt das Verhältnis zwischen $U_T$ und $U_{TF}$ am Punkt 1 in der Figur 4. Wird ein zweiter Datenträger in das Wirkfeld eingebracht, so verkoppeln die beiden Datenträger untereinander und die Resonanzfrequenzen beider Datenträger sinken ab. In diesem Fall wird z. B. der Punkt 2 in der Figur erreicht. Dieser liegt bereits unterhalb der vorgegebenen Frequenz $f_0$. Die Lage des Punktes 2 ist abhängig davon wie stark die Verkopplung zwischen den beiden Datenträgern ist. Dies hängt im wesentlichen vom Abstand der beiden Datenträger untereinander ab. Der Punkt 2 kann sich deshalb noch weiter nach links oder rechts auf der eingezeichneten Linie verschieben. Wird ein weiterer, dritter Datenträger in das Wirkfeld eingebracht, so sinkt die Resonanzfrequenz aller Datenträger weiter unter die vorgegebene Frequenz $f_0$ ab und der Punkt 3 in der Figur wird erreicht. Auch dieser Punkt kann sich längs der eingezeichneten Linie verschieben, je nachdem wie die Verkopplung der drei Datenträger untereinander ist.

Eine Ausnutzung der vollen Resonanzüberhöhung (das Verhältnis von $U_T$ zu $U_{TF}$ ist maximal) ist bei einem Betrieb mit mehreren Karten nicht möglich, weil je nach Anzahl der Karten und deren Verkopplung andere Betriebszustände vorliegen. Vorteilhafterweise wird deshalb die Resonanzfrequenz der Datenträger oberhalb der vorgegebe-nen Frequenz $f_0$ abgestimmt. Dies ist gleichbedeutend damit, daß der Blindanteil der Impedanz eines Datenträgers kapazitiv ist. Jeder Datenträger erhält nur einen Teil der möglichen Spannungsüberhöhung. In dem in der Figur 4 gezeigten Beispiel ist die Spannungsüberhöhung dann auch noch bei der Verkopplung zweier Datenträger vorhanden.

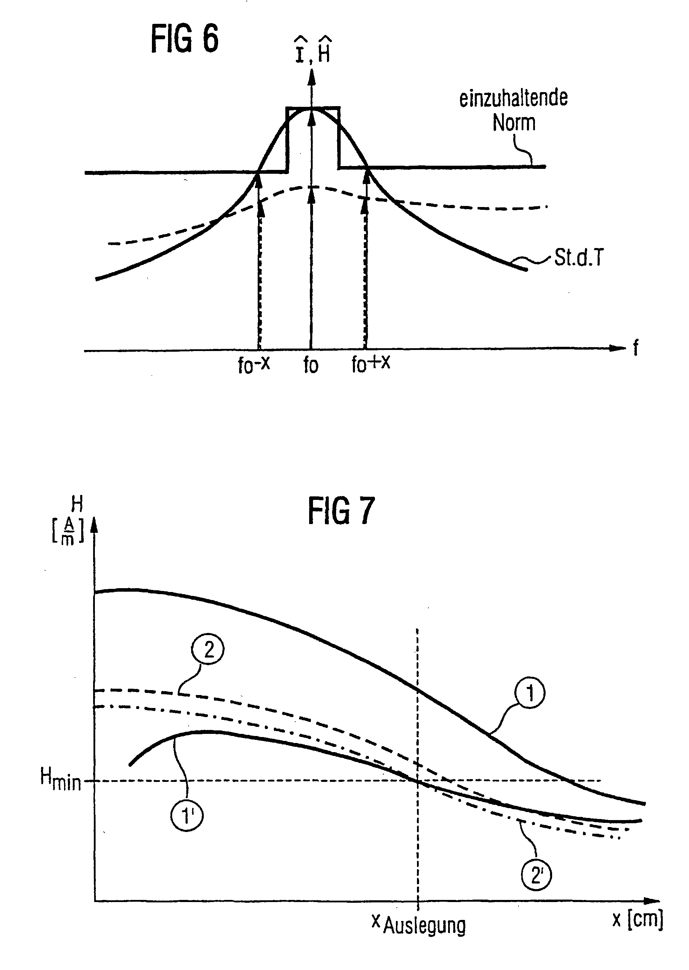

Figur 5 zeigt das Ersatzschaltbild der erfindungsgemäßen Daten-Sende-/Empfangsvorrichtung 1 gemäß der zweiten Lösung. Die Daten-Sende-/Empfangsvorrichtung weist wiederum eine Antenne 6 auf, die aus einem Wirkwiderstand $R_F$ und einer Induktivität $L_F$ modelliert wird. Der Wirkwiderstand $R_F$ und die Induktivität $L_F$ sind in Serie geschalten. Parallel zu der Antenne 6 ist eine Anpaßschaltung 10 geschaltet, die aus einer beliebigen Verschaltung von Kapazitäten C und Induktivitäten L bestehen kann. In der vorliegenden Figur besteht die Anpaßschaltung C aus zwei Kondensatoren $C_1$ und $C_2$. Die Anpaßschaltung 10 weist weiterhin einen Widerstand R auf, der mit dem Widerstand $R_F$ der Antenne 6 verbunden ist. Der Widerstand R dient zur Begrenzung der Güte. Der Kondensator $C_2$ der Anpaßschaltung 10 ist einerseits mit dem Widerstand R der Anpaßschaltung 10 sowie mit der Induktivität $L_F$ der Antenne 6 verbunden. Die Kapazität $C_1$ ist am Verbindungspunkt zwischen dem Widerstand R und der Kapazität $C_2$ angeschlossen. Der andere Anschluß der Kapazität $C_1$ ist mit einer Leitung 9 sowie mit der Induktivität $L_F$ der Antenne 6 verbunden. Die Leitung 9 kann z. B. ein Kabel unbekannter Länge sein, die die Anpaßschaltung 10 mit einer Energieversorgung 3 und einer Innenimpedanz $R_W$ verbindet. Die Leitung unbekannter Länge weist dabei einen bestimmten Wellenwiderstand auf, der z. B. 50 Ohm beträgt. Die Innenimpedanz $R_W$ ist ein rein ohmscher Widerstand und ist an den Wellenwiderstand der Leitung 9 angepaßt.

Die Anpaßschaltung 10 übernimmt die Aufgabe, die Antenne 6 an den Wellenwiderstand der Leitung 9 anzupassen, d. h. die Antenne 6 mit der Anpaßschaltung 10 ist auf Resonanz abgestimmt. Der induktive Blindwiderstand der Antenne 6 ist durch die Kondensatoren $C_1$ und $C_2$ der Anpaßschaltung 10 kompensiert. Der Innenwiderstand $R_W$ bildet die Schaltungsanordnungen der Sendevorrichtung bzw. der Empfangsvorrichtung in vereinfachter Weise nach. Der Widerstand R der Anpaßschaltung 10 ist zur Begrenzung der Güte eingefügt, damit die für die Modulation der vorgesehenen Frequenz nötige Bandbreite erreicht wird.

Gemäß dem Gedanken der Erfindung wird abhängig von den Systemanforderungen (Anzahl der Datenträger, Entfernung des Wirkbereichs) ein zusätzlicher Verlustwiderstand zwischen dem Widerstand R und dem Widerstand $R_F$ der Antenne 6 eingefügt. Dies bedeutet nichts anderes, als daß der Widerstand R der Anpaßschaltung 10 u. U. wesentlich erhöht wird. Diese Erhöhung des Widerstandes R führt dann zu einer Reduzierung des Leistungsbedarfs.

Eine Abschätzung des optimalen Widerstandes $R$ gibt folgende Formel an (gültig für eine Karte, deren Resonanzfrequenz von der vorgegebenen Frequenz $f_0$ abweicht, d. h. $B_T \gg 0$ oder $B_T \ll 0$, zusätzlich $R_T < |B_T|$):

$$R \approx \frac{k_{min} k_{max} (2\pi f_0)^2 L_F L_T}{2 \cdot |B_T|} - R_F$$

$k_{min}$ und $k_{max}$ sind dabei die von den Systemanforderungen festgelegten Funktionsgrenzen (d.h. Reichweite).

Die Funktionsweise dieses Vorgehens wird im folgenden erklärt. Das von der Daten-Sende-/Empfangsvor-richtung bzw. von der Antenne erzeugte magnetische Feld weist sogenannte Feldlücken auf, die durch ein periodisches Kurzschließen der Energieversorgung hervorgerufen werden. Diese Feldlücken dienen zum Übertragen von Daten zum tragbaren Dtanträger. Durch das Kurzschließen der Energieversorgung bilden die Antenne 6, die Anpaßschaltung 10 sowie die Leitung 9 und der Innenwiderstand $R_w$ einen Schwingkreis. Der Strom durch die Antenne 6 bzw. das magnetische Wechselfeld klingen deshalb innerhalb dieser Feldlücke ab. Die Geschwindigkeit des Abklingens wird durch die Güte bestimmt. Ist die Güte dieses Schwingkreises hoch, so klingt der Antennenstrom bzw. das magnetische Feld nur langsam ab. Es ist jedoch erforderlich, daß der Antennenstrom bzw. das magnetische Feld für eine festgelegte Zeit - bezogen auf die Länge der Feldlücke - einen bestimmten Wert unterschreitet, damit sichergestellt ist, daß die Schaltungsanordnung 7 auf dem tragbaren Datenträger 2 diese Informationen noch auswerten kann. Die Güte muß deshalb so bemessen sein, daß der Abklingvorgang in geeigneter Weise möglich ist. In der Praxis bedeutet dies nichts anderes, als daß die Güte z. B. auf einen Wert zwischen 10 und 30 begrenzt wird. Wie bereits erwähnt, wird die Güte durch den Widerstand R in der Anpaßschaltung 10 bestimmt. Die Güte Q berechnet sich folgendermaßen:

$$Q = \frac{2\pi f_0 \cdot L_F}{R + R_F}.$$

Wird der Widerstand R der Anpaßschaltung 10 erhöht, so sinkt die Güte weiterhin ab. Eine kleine Güte hat folglich den Vorteil, daß die Datenübertragung zu dem Datenträger 2 und der Daten-Sende-/Empfangsvorrichtung 1 schnell ablaufen kann.

Normen, welche die Erzeugung von magnetischen Feldern für die induktive Energieübertragung begrenzen, erlauben nur in einem sehr schmalen Frequenzband die Erzeugung hoher Felder. Dieses Frequenzband ist im allgemeinen zu schmal für akzeptable Datenübertragungsraten. Das heißt, die Seitenbänder, welche bei der Modulierung entstehen, liegen außerhalb des schmalen Frequenzbandes und müssen deshalb eine wesentlich geringere Amplitude aufweisen ($\rightarrow$ Norm).

Die Begrenzung der Seitenbänder ist möglich durch:

- generelle Reduzierung des Antennenstromes
- spezielle Modulationsverfahren
- Filterwirkung (hohes Q).

Die Begrenzung der Seitenbänder durch Filterwirkung ist nur begrenzt möglich, da sonst Information weggefiltert wird.

Der Vorteil der Erfindung wird anhand der Figur 6 deutlich, die die Auswirkung eines zusätzlichen Widerstandes auf den Frequenzgang darstellt. Auf der y-Achse ist die Amplitude des Antennenstromes bzw. des magnetischen Feldes H aufgetragen, während auf der x-Achse die Frequenz f dargestellt ist. In Figur 6 ist der Verlauf des Frequenzganges bei einer Daten-Sende-/Empfangsvorrichtung gemäß dem Stand der Technik mit einer Güte zwischen 10 und 30 dargestellt. Der Frequenzgang gibt die Hüllkurve der Amplitude des Antennenstroms bzw. des magnetischen Feldes über der Frequenz wieder. Der Frequenzgang gemäß dem Stand der Technik weist eine hohe Amplitude bei der vorgesehenen Frequenz $f_0$ auf und sinkt symmetrisch an beiden Seiten ab. Eine kleine Güte hat einen flach verlaufenden Frequenzgang, d. h. eine schlechte Filterung von Frequenz-Seitenbändern zur Folge. Eine sehr hohe Güte filtert Seitenbänder um $f_0$ etwas und weist bei $f_0$ ein ausgeprägtes Maximum im Frequenzgang auf. Die eigentlichen Informationen, die zwischen dem Datenträger und der Daten-Sende-/Empfangsvorrichtung ausgetauscht werden, werden in einem Seitenband symmetrisch um die vorgesehene Frequenz $f_0$ übertragen. Beträgt die vorgesehene Frequenz $f_0$ beispielsweise 13,56 MHz, so werden die Informationen z. B. in den Seitenbändern $\pm$ 100 kHz übertragen. Die Amplitude dieser Seitenbänder wird durch die Güte begrenzt. Das Einhalten der Norm wird zu einem Teil entweder durch die Filterwirkung der Güte, zum größeren Teil aber durch eine Reduzierung des Antennen-Stromes ermöglicht. Eine Reduzierung des Stromes bewirkt bei einer Anordnung nach dem Stand der Technik jedoch, daß das magnetische Feld nur noch in einer geringeren Reichweite ausreicht, um eine Datenübertragung zwischen Datenträger und Daten-Sende-/Empfangsvorrichtung zu ermöglichen.

Bei einer Verkleinerung der Güte, wie dies durch das Einfügen eines zusätzlichen Widerstandes in der Erfindung der Fall ist, wird die Filterwirkung verschlechtert. Dies bedeutet nichts anderes als daß der Frequenzgang einen flacheren Verlauf seitlich der vorgegebenen Frequenz $f_0$ aufweist. Diese schlechtere Filterwirkung wird durch das Begrenzen des Antennenstromes durch den zusätzlichen Widerstandes R mehr als kompensiert. Gleichzeitig jedoch ist durch den verringerten Antennenstrom die Reichweite des Wirkfeldes der Daten-Sende-/Empfangsvorrichtung nicht verringert. Dies resultiert daraus, daß beim Einbringen eines Datenträgers das magnetische Feld wesentlich weniger stark zurückgeht als bei einer Anordnung gemäß dem Stand der Technik.

In Figur 7 ist der Magnetfeldverlauf über dem Abstand eines Datenträgers zur Daten-Sende-/Empfangsvorrichtung dargestellt. Die Figur 7 zeigt einen Vergleich des magnetischen Feldes zwischen einer Anordnung gemäß dem Stand der Technik und der erfindungsgemäßen Daten-Sende-/Empfangsvorrichtung. Die Kurven 1 und 2 zeigen die Stärke des magnetischen Feldes, wenn sich kein Datenträger im Wirkfeld der Daten-Sende-/Empfangsvorrichtung befindet. Aufgrund des größeren Stromes durch die Antenne der Daten-Sende-/Empfangsvorrichtung ist das magnetische Feld einer Daten-Sende-/Empfangsvorrichtung gemäß dem Stand der Technik wesentlich stärker als das der erfindungsgemäßen Vorrichtung. Die Kurve 1 zeigt den Feldverlauf einer Anordnung gemäß dem Stand der Technik, die Kurve 2 zeigt einen Verlauf entsprechend der Erfindung.

Das magnetische Feld muß einen Wert $H_{min}$ überschreiten, damit ein Datenaustausch zwischen dem Datenträger und der Daten-Sende-/Empfangsvorrichtung möglich ist. Das magnetische Feld muß bis zu einem Punkt $X_{Auslegung}$ größer oder gleich als die mindestens geforderte magnetische $H_{min}$ sein. Der Strom durch die Daten-Sende-/Empfangsvorrichtung gemäß der Erfindung ist so dimensioniert, daß das magnetische Feld bei der geforderten maximalen Reichweite $X_{Auslegung}$ die Mindestfeldstärke $H_{min}$ leicht überschreitet. Im Gegensatz dazu ist aufgrund des hohen Stromes durch die Antenne im Leerlauf das magnetische Feld bei einer Daten-Sende-/Empfangsvorrichtung gemäß dem Stand der Technik wesentlich höher. Wird in das Wirkfeld der Daten-Sende-/Empfangsvorrichtung ein Datenträger eingebracht, so sinkt aufgrund der Verkopplung der Antennen-Strom bei einer Anordnung gemäß dem Stand der Technik sehr stark ab, was eine starke Verringerung des magnetischen Quell-Feldes zur Folge hat (Kurve 1'). Wird der Datenträger näher an die Antenne der Daten-Sende-/Empfangsvorrichtung herangeführt, wird ein weiteres Absinken des Antennenstromes bewirkt. Dies hat ein weiteres Absinken der magnetischen Feldstärke zur Folge. Beim Einbringen einer oder mehrerer weiterer Datenträger kann deshalb der Antennenstrom abgeschnitten werden d. h. es ist kein Datenaustausch mehr zwischen der Daten-Sende-/Empfangsvorrichtung und dem Datenträger möglich.

Im Gegensatz dazu sinkt aufgrund des zusätzlichen Widerstandes zwischen der Antenne und der Anpaßschaltung der Strom durch die Antenne wesentlich weniger stark ab. Das magnetische Feld ist deshalb beim Einbringen eines Datenträgers in den Wirkbereich der Daten-Sende-/Empfangsvorrichtung nur wenig gegenüber dem Feldverlauf bei keinem Datenträger verringert. Die Kurve 2', die den Feldverlauf mit einem Datenträger im Wirkbereich wiedergibt, liegt deshalb vor allem bei kleinen x höher als der magnetische Feldverlauf bei einer Vorrichtung gemäß dem Stand der Technik (Kurve 1').

Die Erfindung soll anhand eines Beispiels verdeutlicht werden. Als tragbare Datenträger werden Chipkarten verwendet, welche beispielhaft folgende Parameter aufweisen. Die Chipkarten haben eine Betriebsfrequenz $f_0 = 13.56$ MHz, die Kartengröße beträgt ca. 8 cm x 5 cm, der komplexe Anteil der gesamten Impedanz der Chipkarten liegt bei $B_T \approx$ -140 V/A, die Resonanzfrequenz der Chipkarte liegt bei ca. 16.5 MHz, die Induktivität der Spule bei $L_T \approx 3.5$ µH. Die Antenne der Daten-Sende-/Empfangsvorrichtung weist ähnliche Maße wie die der Chipkarten auf. Die Induktivität der Antenne der Daten-Sende-/Empfangsvorrichtung beträgt $L_F \approx 2.3$ µH, die Chipkarten müssen in einem Bereich bis zu 1 cm arbeiten. Dies ergibt Koppelfaktoren $k_{max} = 0.5$ bei aufgelegter Chipkarte auf die Antenne der Daten-Sende-/Empfangsvorrichtung, $k_{min} = 0,35$ in maximaler Entfernung. Maximal können drei Chipkarten im Wirkbereich der Daten-Sende-/Empfangsvorrichtung eingefügt werden. Eine Simulation, die den optimalen Wert eines bewußt eingefügten induktiven Blindwiderstandes in die Antenne ermittelt, ergibt ein Minimum der zur Verfügung zu stellenden Leistung der Energieversorgung bei einem Blindanteil von ca. 80 V/A (induktiv).

Dieses Minimum der von der Energieversorgung zur Verfügung zu stellenden Leistung bleibt für Realteile der Impedanz der Antenne der Daten-Sende-/Empfangsvorrichtung von 0 bis 40 Ω fast gleich und beträgt im Fall ohne Chipkarten im Wirkfeld ca. 10 mW. Werden drei Chipkarten in den Wirkbereich der Daten-Sende-/Empfangsvorrichtung eingebracht so beträgt die von der Antenne aufgenommenen Leistung ca. 60 mW.

Wird bei den gleichen Parametern eine Optimierung gemäß der zweiten Lösung der Erfindung vorgenommen, d. h. es wird ein zusätzlicher Widerstand zwischen die Antenne und die Anpaßschaltung eingefügt, dann wird bei einem optimal gewählten Verlustwiderstand eine Leistung von ca. 200 mW benötigt. Der zusätzliche Verlustwiderstand ist in diesem Fall mittels der oben genannten Formel berechnet worden.

Bei einer Anordnung gemäß dem Stand der Technik, bei dem die Antenne auf Resonanz abgestimmt ist und bei dem der Verlustwiderstand einen Wert von ca. 15 Ω aufweist, um die notwendige Bandbreite für die Datenübertragung sicherzustellen, müßten ca. 500 mW bereitgestellt werden.

Ein weiterer Zuspruch für die Optimierung mittels eines zusätzlichen Verlustwiderstandes zwischen der Antenne und der Anpaßschaltung. Werden z. B. Chipkarten mit den obigen Parametern eingesetzt ($f_0$=13.56 MHz, Kartengröße ca. 8 cm x 5 cm, $B_T \approx$-170 V/A, $L_T \approx 3,5$µH, $L_F \approx 3,5$ µH bei gleicher Antenne der Daten-Sende-/Empfangsvorrichtung, geforderte Reichweiten von wenigen cm: $k_{max}$=0.5, $k_{min}$=0.2) so ergibt ein optimaler Verlustwiderstand von ca. 25 Ω. Bei einer Dimensionierung gemäß dem Stand der Technik würde der Widerstand R zur Begrenzung der Güte ca. 6 Ω betragen. Es ist dabei zu beachten, daß die Werte der Kondensatoren $C_1$ und $C_2$ der Anpaßschaltung in beiden Fällen andere Werte aufweisen, die nach der Dimensionierung des Widerstandes R berechnet werden.

Durch die einfache Schaltungsmaßnahme der Erhöhung des Verlustwiderstandes kann die maximale Leistungsaufnahme des Antennenkreises von 80 mW auf 30 mW gesenkt werden. Hierdurch bedingt sinkt der notwendige Strom durch die Antenne der Daten-Sende-/Empfangsvorrichtung von 80 mA auf 25 mA.

Der optimale Wert des zusätzlichen Verlustwiderstandes bzw. des zusätzlichen induktiven Blindwiderstandes in der Antenne kann jeweils nur durch eine aufwendige Optimierungsrechnung gefunden werden, wobei die Randbedingungen durch die Systemanforderungen (minimale und maximale Reichweite, Anzahl der Karten, Karteneigenschaften, unter Umständen vorgegebene Antenne, Betriebsfrequenz, usw.) vorgegeben sind.

Grundsätzlich erweist sich die Abstimmung der Antenne auf Resonanz gemäß dem Stand der Technik als die ungünstigste Lösung. Bei Systemen mit großen geforderten Reichweiten und den damit verbundenen großen Leistungen der Antennenspule ist eine Optimierung nur noch schwer möglich, weil die unvermeidlichen auftretenden Verlustwiderstände größer sein können als die optimal errechneten.

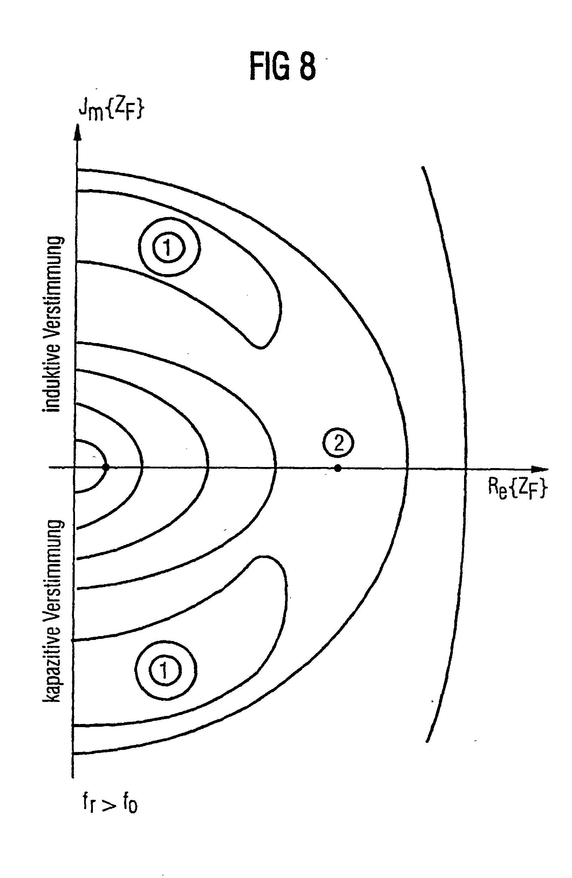

In Figur 8 ist das Ergebnis einer Simulationsrechnung dargestellt. Es sind Linien gleicher Leistungsaufnahme der Energieversorgung im Leerlauf dargestellt, d. h. bei unterschiedlicher Auslegung des Wirkwiderstandes und/oder des induktiven Blindwiderstandes der Antenne der Daten-Sende-/Empfangsvorrichtung. Auf der x-Achse ist der Realteil der Antennenimpedanz aufgetragen, während auf der y-Achse der Imaginärteil der Antennenimpedanz dargestellt ist. Die dargestellten Ergebnisse gelten bei einer Resonanzfrequenz des Datenträgers, der über der vorgegebenen Frequenz $f_0$ der Daten-Sende-/Empfangseinrichtung liegt.

Bei einer Vorrichtung gemäß dem Stand der Technik ist die Antenne auf Resonanz abgestimmt. Dies bedeutet, daß die Impedanz der Antenne nur einen Wirkanteil aufweist. Üblicherweise werden Wirkanteile bei einer Antenne gemäß dem Stand der Technik mit kleinen Verlustwiderständen realisiert. Dieser Punkt hoher Leistungsaufnahme befindet sich auf der x-Achse nahe des Ursprungs. Wandert man auf der x-Achse weiter nach rechts, d. h. erhöht man den Verlustwiderstand der Antenne, so wird eine immer geringere Leistung benötigt. Die minimale Leistungsaufnahme wird bei einem Punkt 2 erreicht, der einem Widerstand aufweist, der nach der oben beschriebenen Formel berechnet ist. Geht man über den Punkt 2 auf der x-Achse weiter nach rechts, d. h. wird der Verlustwiderstand noch weiter erhöht, so steigt auch die Leistungsaufnahme im Leerlauf wieder an. Ein Punkt auf der x-Achse entspricht einer auf Resonanz abgestimmten Antenne.

Fügt man gemäß der ersten Lösung der Erfindung einen induktiven Blindwiderstand in die Antenne ein, d. h. man bewegt sich auf der y-Achse nach oben oder unten, so verringert sich bei kleineren Wirkwiderständen der Antenne die Leistungsaufnahme kontinuierlich bis man die minimale Leistungsaufnahme in den mit 1 gekennzeichneten Punkten erreicht. In den mit 1 markierten Kreisen erreicht man die Werte für die Impedanz der Antenne, bei denen die geringste Leistung aufgenommen wird.

Beläßt man die Werte der induktiven Blindwiderstände wie in den mit 1 markierten Punkten bei und erhöht weiter den Wirkwiderstand der Antenne zum Beispiel über einen zusätzlichen Verlustwiderstand, so steigt die benötigte Leistung wiederum an. In der bevorzugten Ausgestaltungsform wird die Leistungsminimierung über einen Blindwiderstand in der Antenne vorgenommen.

Die Erfindung ermöglicht es, mit minimalem Schaltungsaufwand, eine kostengünstige Leistungsreduzierung beim Erzeugen eines magnetischen Wechselfeldes einer Daten-Sende-/Ernpfangsvorrichtung zum Betrieb von mindestens einem Datenträger durchzuführen.

Das Optimum kann in beiden vorgeschlagenen Varianten nur durch eine Optimierung aufgrund der bevorstehenden Systemeigenschaften gefunden werden. Das Optimierungspotential ist für sogenannten Closed Coupled Systeme am größten.

**Patentansprüche**

1. Vorrichtung mit einer Daten-Sende-/Empfangsvorrichtung (1) und mindestens einem tragbaren Datenträger (2) zum kontaktlosen Übertragen von Daten zwischen der Daten-Sende/Empfangsvorrichtung (1) und dem mindestens einen tragbaren Datenträger (2),
wobei die Daten-Sende-/Empfangsvorrichtung (1)

- eine Sendevorrichtung (4) zum Erzeugen eines ersten Signals mit einer vorgegebenen Frequenz,
- eine Empfangsvorrichtung (5) zum Empfangen eines zweiten Signals mit einer vorgegebenen Frequenz,

  - eine Antenne (6), die mit der Sendevorrichtung (4) und der Empfangsvorrichtung (5) über eine Leitung (9) unbekannter Länge verbunden ist und die Leitung einen Wellenwiderstand aufweist,
  - eine Anpaßschaltungsanordnung (10), mit mindestens einem Widerstand (R ) zur Begrenzung der Güte zwischen der Antenne (6) und der Sendevorrichtung (4) bzw. Empfangsvorrichtung (5) zur Anpassung der Gesamtimpedanz an den Wellenwiderstand der Leitung (9) aufweist

  und wobei der tragbare Datenträger (2)

  - eine Datenträger-Antenne (8) zum Empfangen oder Senden eines induzierten Signals und
  - eine mit der Datenträger-Antenne (8) verbundene Schaltungsanordnung (7) zum Verarbeiten des induzierten Signals und Erzeugen eines Signals aufweist, welches zur Antenne (6) der Daten-Sende-/Empfangsvorrichtung (1) gesendet wird,

wobei die Anpaßschaltung (10) einen zusätzlichen Verlustwiderstand aufweist, und
wobei die Summe aus dem Widerstand zur Begrenzung der Güte und dem zusätzlichen Verlustwiderstand nach folgender Formel berechnet wird:

$$R \approx \frac{k_{min} k_{max} (2\pi f_0)^2 \, L_F \, L_T}{2 \cdot |B_T|} - R_F \, .$$

mit

$k_{min}$ :     minimaler Koppelfaktor,
$k_{max}$ :     maximaler Koppelfaktor,
$f_0$ :     Frequenz der Daten-Sende-/Empfangsvorrichtung,
$L_F$ :     Induktivität der Antenne der Daten-Sende-/Empfangsvorrichtung,
$L_T$ :     Induktivität der Antenne des Datenträgers,
$B_T$ :     Blindwiderstand der Antenne des Datenträgers und
$R_F$ :     Wirkwiderstand der Antenne der Daten-Sende-/Empfangsvorrichtung.

2. Vorrichtung zum kontaktlosen Übertragen von Daten nach Patentansprüch 1,
   wobei die Resonanzfrequenz des tragbaren Datenträgers (2) unter der vorgegebenen Frequenz liegt.

3. Vorrichtung zum kontaktlosen Übertragen von Daten nach Patentansprüch 1,
   wobei die Resonanzfrequenz des tragbaren Datenträgers (2) größer oder gleich der vorgegebenen Frequenz ist.

4. Vorrichtung zum kontaktlosen Übertragen von Daten nach einem der Patentansprüche 1 bis 3,
   wobei die Schaltungsanordnung (7) mittels eines integrierten Halbleiter-Chips ausgeführt ist.

5. Vorrichtung zum kontaktlosen Übertragen von Daten nach einem der Patentansprüche 1 bis 3,
   wobei die Schaltungsanordnung (7) diskret realisiert ist.

6. Vorrichtung zum kontaktlosen Übertragen von Daten nach einem der Patentansprüche 1 bis 5,
   wobei eine Verkopplung der Antenne (6) der Daten-Sende-/Empfangsvorrichtung (1) und der Datenträger-Antenne (8) in einem Bereich von 0 bis 4 cm stattfindet.

7. Vorrichtung zum kontaktlosen Übertragen von Daten nach einem der Patentansprüche 1 bis 5,
   wobei eine Verkopplung der Antenne (6) der Daten-Sende-/Empfangsvorrichtung (1) und der Datenträger-Antenne (8) in einem Bereich von 0 bis 15 cm stattfindet.

8. Vorrichtung zum kontaktlosen Übertragen von Daten nach einem der Patentansprüche 1 bis 5,
   wobei eine Verkopplung der Antenne (6) der Daten-Sende-/Empfangsvorrichtung (1) und der Datenträger-Antenne (8) in einem Bereich von 0 bis 1 m stattfindet.

**Claims**

1. Device having a data transceiver (1) and at least one portable data medium (2) for contactless transmission of data between the data transceiver (1) and the at least one portable data medium (2), in which the data transceiver (1) has

   - a transmitting device (4) for producing a first signal with a prescribed frequency,
   - a receiving device (5) for receiving a second signal with a prescribed frequency,
   - an antenna (6) which is connected to the transmitting device (4) and the receiving device (5) via a line (9) of unknown length, and the line has a characteristic impedance,
   - a matching circuit arrangement (10) having at least one resistor (R) for limiting the factor Q between the antenna (6) and the transmitting device (4) or receiving device (5) for the purpose of matching the total impedance to the characteristic impedance of the line (9)

and in which the portable data medium (2) has

- a data medium antenna (8) for receiving or transmitting an induced signal, and
- a circuit arrangement (7), connected to the data medium antenna (8), for processing the induced signal and producing a signal which is sent to the antenna (6) of the data transceiver (1), the matching circuit (10) having an additional loss resistance, and in which the sum of the resistance relating to the limitation of the factor Q and the additional loss resistance is calculated using the following formula:

$$R \approx \frac{k_{min}k_{max}(2\pi f_0)^2 L_F L_T}{2 \cdot |B_T|} - R_F \; .$$

where

$k_{min}$ : minimum coupling factor,
$k_{max}$ : maximum coupling factor,
$f_0$ : frequency of the data transceiver
$L_F$ : inductance of the antenna of the data transceiver
$L_T$ : inductance of the antenna of the data medium
$B_T$ : reactance of the antenna of the data medium and
$R_F$ : resistance of the antenna of the data transceiver.

2. Device for contactless transmission of data according to Patent Claim 1, in which the resonant frequency of the portable data medium (2) is lower than the prescribed frequency.

3. Device for contactless transmission of data according to Patent Claim 1, in which the resonant frequency of the portable data medium (2) is higher than or equal to the prescribed frequency.

4. Device for contactless transmission of data according to one of Patent Claims 1 to 3, in which the circuit arrangement (7) is implemented by means of an integrated semiconductor chip.

5. Device for contactless transmission of data according to one of Patent Claims 1 to 3, in which the circuit arrangement (7) is implemented discretely.

6. Device for contactless transmission of data according to one of Patent Claims 1 to 5, in which coupling of the antenna (6) of the data transceiver (1) and the data medium antenna (8) takes place in a range from 0 to 4 cm.

7. Device for contactless transmission of data according to one of Patent Claims 1 to 5, in which coupling of the antenna (6) of the data transceiver (1) and the data medium antenna (8) takes place in a range from 0 to 15 cm.

8. Device for contactless transmission of data according to one of Patent Claims 1 to 5, in which coupling of the antenna (6) of the data transceiver (1) and the data medium antenna (8) takes place in a range from 0 to 1 m.

**Revendications**

1. Dispositif comprenant un dispositif (1) d'émission/réception de données et au moins un support (2) de données portatif pour la transmission sans contact de données entre le dispositif (1) d'émission/réception de données et le au moins un support (2) de données portatif,
   dans lequel le dispositif (1) d'émission/réception de données comprend

   - un dispositif (4) d'émission pour produire un premier signal d'une fréquence donnée à l'avance,
   - un dispositif (5) de réception pour recevoir un deuxième signal d'une fréquence donnée à l'avance,
   - une antenne (6) qui est reliée au dispositif (4) d'émission et au dispositif (5) de réception par une ligne (9) d'une longueur inconnue et la ligne a une impédance caractéristique,
   - un circuit (10) d'adaptation ayant au moins une résistance (R) de limitation du facteur de qualité entre l'antenne (6) et le dispositif (4) d'émission ou le dispositif (5) de réception pour adapter l'impédance totale à l'impédance caractéristique de la ligne (9)

et dans lequel le support (2) de données portatif comprend

- une antenne (8) de support de données pour la réception ou l'émission d'un signal induit et
- un circuit (7) relié à l'antenne (8) du support de données pour traiter le signal induit et produire un signal qui est envoyé à l'antenne (6) du dispositif (1) d'émission/réception de données,

le circuit (10) d'adaptation ayant une résistance ohmique supplémentaire et
la somme de la résistance de limitation du facteur de qualité et de la résistance ohmique supplémentaire étant calculée par la formule suivante :

$$R \approx \frac{k_{min}k_{max}(2\pi f_0)^2 L_F L_T}{2.|B_T|} - R_F,$$

avec

$k_{min}$ : facteur de couplage minimum
$k_{max}$ : facteur de couplage maximum
$f_0$ : fréquence du dispositif d'émission/réception de données
$L_F$ : inductance de l'antenne du dispositif d'émission/réception de données
$L_T$ : inductance de l'antenne du support de données
$B_T$ : réactance de l'antenne du support de données et
$R_F$ : résistance effective de l'antenne du dispositif d'émission/réception de données.

2. Dispositif de transmission sans contact de données suivant la revendication 1,
dans lequel la fréquence de résonance du support (2) de données portatif est inférieure à la fréquence donnée à l'avance.

3. Dispositif de transmission sans contact de données suivant la revendication 1,
dans lequel la fréquence de résonance du support (2) de données portatif est supérieure ou égale à la fréquence donnée à l'avance.

4. Dispositif de transmission sans contact de données suivant l'une des revendications 1 à 3,
dans lequel le circuit (7) est réalisé au moyen d'une puce à semiconducteur intégrée.

5. Dispositif de transmission sans contact de données suivant l'une des revendications 1 à 3,
dans lequel le circuit (7) est réalisé de manière discrète.

6. 5. Dispositif de transmission sans contact de données suivant l'une des revendications 1 à 5,
dans lequel un couplage de l'antenne (6) du dispositif (1) d'émission/réception de données et de l'antenne (8) du support de données a lieu dans une plage de 0 à 4 cm.

7. 5. Dispositif de transmission sans contact de données suivant l'une des revendications 1 à 5,
dans lequel un couplage de l'antenne (6) du dispositif (1) d'émission/réception de données et de l'antenne (8) du support de données a lieu dans une plage de 0 à 15 cm.

8. Dispositif de transmission sans contact de données suivant l'une des revendications 1 à 5,
dans lequel un couplage de l'antenne (6) du dispositif (1) d'émission/réception de données et de l'antenne (8) du support de données a lieu dans une plage de 0 à 1 m.

# FIG 1

Energieversorgung

Sendevorrichtung

Empfangsvorrichtung

FIG 2A

FIG 2B

FIG 3A

FIG 3B

## FIG 4

## FIG 5

17

FIG 6

FIG 7

# FIG 8